# EUROPÄISCHE PATENTSCHRIFT

(11) **EP 0 831 385 B1**
(45) Veröffentlichungstag und Bekanntmachung des Hinweises auf die Patenterteilung: **14.11.2001**
(21) Anmeldenummer: 97115809.2
(22) Anmeldetag: 11.09.1997
(51) Int. Cl.: G05D 23/19

(54) **Fühlerlose Temperaturregelung einer Heizvorrichtung**
Sensor-free temperature control of a heating device
Système de contrôle de température d'un dispositif de chauffage sans détecteur

(30) Priorität: 14.09.1996 DE 19637561
(43) Veröffentlichungstag der Anmeldung: 25.03.1998
(73) Patentinhaber: D.I.E.N.E.S. APPARATEBAU GMBH, D-63165 Mühlheim (DE)
(72) Erfinder: Lehle, Erhard, 63165 Mühlheim (DE)
(74) Vertreter: Rentzsch, Heinz, Dipl.-Ing.

(56) Entgegenhaltungen:
- DE-A- 2 039 717
- DE-A- 3 330 915
- DE-A- 4 024 432
- US-A- 5 144 814

## Beschreibung

Für die Temperaturregelung induktiv beheizter Galetten in Textilmaschinen haben sich im wesentlichen zwei Arten von Temperaturfühlern eingebürgert. Bei der einen Art steht ein gestellfester Fühler dem Galettenmantel gegenüber oder ragt in eine umlaufende Ringnut an der gestellseitigen Stirnseite der Galette hinein. Ein solcher Fühler ist für mechanische Beschädigung anfällig, wenn bei einem Fadenriß der Faden den Fühler umschlingt und verbiegt. Bei der zweiten Art befindet sich der Fühler im rotierenden Galettenmantel, und seine Ausgangssignale werden über einen Drehübertrager berührungsfrei an einen stationären Temperaturregler für den Galettenheizer übertragen. Hier schlägt der Übertrager zu Buche.

Die DE 20 39 717 B2 schlägt deshalb eine fühlerlose Temperaturregelung für eine induktiv beheizte Galette vor, bei der die an die Induktionsspule abgegebene elektrische Heizleistung in direkter Abhängigkeit von dem die stationäre Induktionsspule durchfließenden Strom und der Speisespannung gesteuert wird. Eine Brückenschaltung bildet ein sich mit dem ohmschen Widerstand des Galettenmantels änderndes Signal. Der Galettenmantel selbst mit seinem temperaturabhängigen, aus den Induktivitäten und ohmschen Widerständen von Heizer und Galette gebildeten Ersatzwiderstand dient als Meßfühler.

Des weiteren ist aus DE 40 24 432 C2 eine Verfahren gemäß Oberbegriff des Anspruchs 1 bekannt. Hierbei wird zur Eichung vorab der ohmsche Widerstand R der Galette in Abhängigkeit von der Temperatur gemessen und eine hieraus errechnete Funktion T = f_{T} (R) abgespeichert. Ferner wird der Strom I_{L} durch die Hauptinduktivität in Abhängigkeit vom Spannungsabfall U_{L} an der Hauptinduktivität gemessen und eine hieraus abgeleitete Funktion I_{L} = f_{L} (U_{L}) abgespeichert. In der Betriebsphase wird dann aus den Meßgrößen U_{L} und I_{L} die Ist-Temperatur Tᵢₛₜ der Galette nach der Formel Tᵢₛₜ = f_{T} x U_{L} / (I_{L} - f_{L} (U_{L})) bzw. nach einer Näherungsformel berechnet und durch Vergleich mit einer Solltemperatur ein Stellsignal für den Heizer erzeugt. Der Messung der Spannung U_{L} an der Hauptinduktivität dient eine Hilfswicklung.

Mit der im Anspruch 1 gekennzeichneten Erfindung wird ein mit wesentlich verringertem Rechenaufwand durchführbares und keine besondere Hilfswicklung benötigendes Verfahren vorgeschlagen, welches zugleich etwaige Änderungen von Kontaktübergangswiderständen, Leitungswiderständen, Sicherungen oder dergleichen ausgleicht. Vorteilhafte Ausgestaltungen der Erfindung sind in den Unteransprüchen gekennzeichnet. Die Anwendung der Erfindung ist keineswegs auf induktiv beheizte Galetten - mit oder ohne Kurzschlußring - beschränkt, sondern kann auch bei beliebigen anderen Heizvorrichtungen erfolgen, deren elektrischer Widerstand temperaturabhängig ist, z.B. bei Tantal-Heizstäben. Die Erfindung, ihre physikalischen Grundlagen sowie ein Ausführungsbeispiel werden nachfolgend erläutert.

Bei einer induktiv beheizten Galette bildet ein aus U-förmigen Dynamoblechen aufgebauter Rotationskörper einen stationären Induktor, der von wenigstens einer Erregerwicklung umgeben ist. Der magnetische Rückschluß erfolgt über den rotierenden Mantel der den Induktor umgebenden Eisenrolle. Zur Erhöhung der Wärmeleistung ist vielfach auf der Innenseite der Rolle ein Kurzschlußring aus Kupfer oder einer Kupferlegierung angebracht, der im wesentlichen die Sekundärwicklung des Transformators bildet. Ein solcher Kurzschlußring hat ein ausgeprägtes Temperaturverhalten, das auf die Primärseite, d.h. den mit Wechselstrom erregten Induktor transformiert wird. Diese Tatsache wird dazu ausgenutzt, über eine Messung des Primärwiderstands R_{ac} den Sekundärwiderstand und hieraus die tatsächliche Galettentemperatur Tᵢₛₜ zu ermitteln.

Der Induktor wird normalerweise impulsförmig mit Wechselstrom gespeist, wobei die Dauer der einzelnen Pulspakete die zugeführte Leistung bestimmt. Während einer sich periodisch wiederholenden Zeitspanne von 0,1 sec, das sind 5 Perioden bei 50Hz bzw. 6 Perioden bei 60Hz, werden die arithmetischen Mittelwerte des Wechselstroms I_{ac} und der speisenden Wechselspannung U_{ac} mittels zweier integrierender Dual-Slope-Wandler gemessen. Dieser Meßvorgang wiederholt sich im Rhythmus des Abtastzyklus des Temperaturreglers von beispielsweise 1 bis 2 Sekunden. Der Quotient R_{ac} = U_{ac}/I_{ac} bildet bereits den Sekundärwiderstand und somit dessen Temperatur ab, zunächst allerdings mit zwei Einschränkungen:
a) auch die primäre Induktorspule ist temperaturabhängig, weil sie mit der Galette thermisch gekoppelt und ihr Kupferwiderstand temperaturabhängig ist;
b) der gemessene Primärwiderstand ist infolge von Nichtlinearitäten des Induktorkerns von der angelegten Spannung abhängig.

Die genaue Bestimmung des temperaturabhängigen Sekundärwiderstands bezieht deshalb gemäß der Erfindung auch den Gleichstromwiderstand R_{dc} und die angelegte Speisespannung Uₛ mit ein. Wie dies geschieht, beschreibt Anspruch 2. Dabei weist der Index E auf die Eichphase und der Index B auf die Betriebsphase hin. In der Eichphase werden also der Gleichstromwiderstand R_{dcE} und der Wechselstromwiderstand R_{acE} der Heizvorrichtung in Abhängigkeit von der Temperatur des beheizten Maschinenteils bei verschiedenen Werten der Versorgungswechselspannung U_{sE} gemessen und für jedes Paar von Temperatur- und Spannungswert eine primäre Widerstandsdifferenz ΔR_{E} = R_{acE} - R_{dcE} gebildet und in einem der Heizvorrichtung zugeordneten Speicher abgespeichert. In der Betriebsphase werden dann die Versorgungswechselspannung U_{sB} sowie zeitlich abwechselnd der Wechselstromwiderstand R_{acB} und der Gleichstromwiderstand R_{dcB} der Heizvorrichtung gemessen, die Widerstandsdifferenz ΔR_{B} = R_{acB} - R_{dcB} berechnet und mit dem der gemessenen Versorgungsspannung U_{sB} zugeordneten, gespeicherten Wert ΔR_{E} verglichen und aus der Abweichung das Stellsignal für einen der Heizvorrichtung zugeordneten Temperaturregler abgeleitet.

Da sich die Temperatur der Induktorwicklung nur verhältnismäßig langsam ändert, genügt es im praktischen Betrieb, beispielsweise alle 60 Sekunden, den Gleichstromwiderstand R_{dc} zu messen. Hierzu wird die Wechselspannungszufuhr vorübergehend abgeschaltet und über einen Schalter und einen Hochlast-Präzisionswiderstand die Induktorspule an eine zumindest kurzzeitig stabile Gleichspannung U_{dc} gelegt. Der auf diese Weise gemessene Gleichspannungsabfall an der Induktorspule und der Widerstandswert des mit diesem in Reihe liegenden des Präzisionswiderstands und die gemessene Gleichspannung erlauben in bekannter Weise die Ermittlung des primären Gleichstromwiderstands R_{dc}. Dazu zählen auch Zuleitungswiderstände sowie der Widerstand in den Zuleitungen liegender Kontakte und/oder Sicherungen. Dies ist von Vorteil bei Änderungen des Kontaktwiderstands, Austausch von Sicherungen oder Änderung der Zuleitungstemperatur. Infolge der Zuleitung des Meß-Gleichstroms über einen im Verhältnis zum Gleichstromwiderstand des Induktors vielfach höheren Vorwiderstand ist praktisch ein Konstantstrombetrieb gegeben. Damit wird die Einschwingzeit, verursacht durch die Induktivität des Induktors, gegenüber einer Konstantspannungseinspeisung drastisch verkürzt. Sie beträgt nur noch etwa 0,5 sec. Erst nach dieser Zeitspanne wird gemessen.

Zur Berechnung einer primären Widerstandsdifferenz ΔR_{B} wird der gemessene Gleichstromwiderstand R_{dc} vorzugsweise skalar vom gemessenen Wechselstromwiderstand R_{ac} subtrahiert, d.h. △R_{B} = R_{ac} - R_{dc}. Eine solche skalare Subtraktion ist innerhalb der Genauigkeitsgrenzen erlaubt weil der Scheinwiderstand R_{ac} des Induktors nur einen kleinen Blindanteil hat, d.h. cosϕ ≈ 1.

Vor der bislang beschriebenen Messung und Widerstandsdifferenz-Ermittlung -Ermittlung während der Betriebsphase wird während einer nur einmal für jede Galette durchzuführenden Eichphase die gleiche Messung und Ermittlung einer primären Widerstandsdifferenz ΔR_{E} in Abhängigkeit von der tatsächlichen Oberflächentemperatur der Galette durchgeführt. Diese Temperatur wird mit einem geeichten Oberflächentemperaturmesser bekannter Bauweise ermittelt. Die in dieser Eichphase in der oben geschilderten Weise durch Strom- und Spannungsmessung sowie Berechnung ermittelte primäre Widerstandsdifferenz ΔR_{E} wird für jede Galette in einer Stütztabelle in Abhängigkeit von der jeweiligen Galettentemperatur T_{g} und der Speisespannung Uₛ abgespeichert. Der Speicher kann beispielsweise in Form eines PROM jeder Galette beigegeben werden oder für alle Galetten einer Textilmaschine in einem der Maschine zugeordneten Bedien- oder Prozeßrechner vorgesehen sein. Im Betrieb wird in periodischen Abständen nach obiger Methode die primäre Widerstandsdifferenz ΔR_{B} ermittelt und die jeweilige Speisespannung U_{sB} gemessen. Durch Vergleich mit dem in der Stütztabelle in Abhängigkeit von Speisespannung Uₛ und Temperatur abgelegten Wert der primären Widerstandsdifferenz ΔR_{E} wird ein der Regelabweichung entsprechender Temperatur-Korrekturwert berechnet und dem Temperaturregler für die Galette aufgeschaltet.

## Patentansprüche

1. Verfahren zur fühlerlosen Temperaturregelung einer einen temperaturabhängigen elektrischen Widerstand aufweisenden Heizvorrichtung für Maschinenteile, wobei in einer Eichphase temperaturabhängige elektrische Werte der Heizvorrichtung in Abhängigkeit von der Temperatur ermittelt und abgespeichert werden und in der Betriebsphase ermittelte temperaturabhängige elektrische Werte mit den abgespeicherten verglichen werden und hieraus ein Stellsignal für die Heizvorrichtung abgeleitet wird, **dadurch gekennzeichnet, daß** zur Ermittlung der temperaturabhängigen elektrischen Werte sowohl in der Eichphase als auch in der Betriebsphase der Gleichstromwiderstand (R_{dc}) und der Wechselstromwiderstand (R_{ac}) gemessen werden und die Differenz (ΔR) der beiden gemessenen Widerstandswerte (R_{ac}, R_{dc}) gebildet wird.

2. Verfahren nach Anspruch 1, **dadurch gekennzeichnet, daß** in der Eichphase der Gleichstromwiderstand (R_{acE}) und der Wechselstromwiderstand (R_{dcE}) der Heizvorrichtung in Abhängigkeit von der Temperatur des beheizten Maschinenteils bei verschiedenen Werten der Versorgungswechselspannung (U_{sE}) gemessen werden und für jedes jeweils aus einem Temperaturwert und einem Spannungswert bestehende Wertepaar die Differenz (ΔR_{E} = R_{acE} - R_{dcE}) der beiden gemessenen Widerstandswerte gebildet und in einem der Heizvorrichtung zugeordneten Speicher abgespeichert wird.

3. Verfahren nach Anspruch 1 oder 2, dadurch gekennzeichtnet, daß in der Betriebsphase die Versorgungswechselspannung (U_{sB}) sowie zeitlich abwechselnd der Wechselstromwiderstand (R_{acB}) und der Gleichstromwiderstand (R_{dcB}) der Heizvorrichtung gemessen werden, die Widerstandsdifferenz (△R_{B} = R_{acB} - R_{dcB}) berechnet und mit dem der gemessenen Versorgungsspannung (U_{sB}) zugeordneten gespeicherten Wert (△R_{E}) verglichen und aus der Abweichung das Stellsignal für einen der Heizvorrichtung zugeordneten Temperaturregler abgeleitet wird.

4. Verfahren nach Anspruch 2 oder 3, **dadurch gekennzeichnet, daß** zur Messung des Gleichstromwiderstands (R_{dc}) periodisch die Versorgungswechselspannung (Uₛ) von der Heizvorrichtung getrennt und dieser statt dessen eine Gleichspannung (U_{dc}) zugeführt wird.

5. Verfahren nach Anspruch 4, **dadurch gekennzeichnet, daß** die Gleichspannung über einen gegenüber dem Widerstand der Heizvorrichtung hohen Vorwiderstand an die Heizvorrichtung gelegt wird.

6. Verfahren nach einem der Ansprüche 1 bis 5, **dadurch gekennzeichnet, daß** der gemessene Gleichstromwiderstand (R_{dc}) skalar vom gemessenen Wechselstromwiderstannd (R_{ac}) subtrahiert wird.

7. Verfahren nach einem der Ansprüche 1 bis 6, **dadurch gekennzeichnet, daß** der Meßvorgang in der Betriebsphase im Rhythmus des Abtastzyklus eines mehreren Heizvorrichtungen zugeordneten Temperaturreglers wiederholt wird.

8. Verfahren nach einem der Ansprüche 1 bis 7, **dadurch gekennzeichnet, daß** die Heizvorrichtung der Induktionsheizer einer Galette ist.

9. Verfahren nach einem der Ansprüche 1 bis 7, **dadurch gekennzeichnet, daß** die Heizvorrichtung ein Widerstandsheizer, z.B. ein Tantalheizstab ist.

## Claims

1. A method of sensor-free temperature control of a heating device for machine parts, said heating device having a temperature responsive resistance, where during a calibration phase temperature responsive electrical values of said heating device are determined dependent on temperature and are stored, and where temperature responsive electrical values determined during an operating phase are compared with said stored values and from this comparison an electrical control signal is derived for said heating device, **characterized in that** for determining said temperatur responsive electrical values during said calibration phase as well as during said operating phase the DC resistance (R_{dc}) and the AC restistance (R_{ac}) are measured and the difference (ΔR) of the two measured resistance values (R_{dc}, R_{ac}) is calculated.

2. The method of claim 1, **characterized in that** during the calibration phase the DC resistance (R_{dcE}) and the AC resistance (R_{acE}) of the heating device are measured dependent on the temperature of the heated machine part at different values of the supply AC voltage (U_{sE}), and for each pair of values, consisting of a temperature value and a voltage value, the difference (ΔR_{E} = R_{acE} - R_{dcE}) of said two measured resistance values is calculated and is stored in a memory associated with said heating device.

3. The method of claim 1 or 2, **characterized in that** during said operating phase the supply AC voltage (U_{sB}) and temporal alternatingly the AC resistance (R_{acB}) and the DC resistance (R_{dcB}) of the heating device are measured, the resistance difference (△R_{B} = R_{acB} - R_{dcB}) is calculated and is compared with the stored value (△R_{E}) as associated with the measured supply voltage (U_{sB}), and from the deviation said control signal is derived for a temperature controller associated with said heating device.

4. The method of claim 2 or 3, **characterized in that** for measuring the DC resistance (R_{dc}) the supply AC voltage (Uₛ) is periodically switched-off from that heating device, which instead is supplied with a DC voltage (U_{dc}).

5. The method of claim 4, **characterized in that** the DC voltage is connected to said heating device via a series resistor having a restistance which is high when compared with the resistance of said heating device.

6. The method according to one of the claims 1 to 5, **characterized in that** the measured DC resistance (R_{dc}) is scalarly subtracted from the measured AC resistance (R_{ac}).

7. The method according to one of the claims 1 to 6, **characterized in that** the measuring procedure during the operating phase is repeated in accordance with the scanning cycle of a temperature controller which co-operates with several heating devices .

8. The method according to one of the claims 1 to 7, **characterized in that** said heating device is the induction heater of a heated roll.

9. The method according to one of the claims 1 to 7, **characterized in that** said heating device is a resistance heater, e.g. a tantalum heating rod.

## Revendications

1. Procédé pour la régulation de température sans sonde sur un dispositif de chauffage de pièces de machine dont la résistance électrique dépend de la température, dans lequel, dans une phase d'étalonnage, des valeurs électriques dépendant de la température du dispositif de chauffage sont déterminées en fonction de la température et sont mises en mémoire, et des valeurs électriques dépendant de la température déterminées pendant la phase de fonctionnement sont comparées aux valeurs mises en mémoire pour en déduire un signal de réglage du dispositif de chauffage, **caractérisé en ce que** pour déterminer les valeurs électriques dépendant de la température, aussi bien dans la phase d'étalonnage que dans la phase de fonctionnement, la résistance en courant continu (R_{dc}) et la résistance en courant alternatif (R_{ac}) sont mesurées, et la différence (ΔR) des deux valeurs de résistance mesurées (R_{ac}, R_{dc}) est formée.

2. Procédé selon la revendication 1, **caractérisé en ce que** dans la phase d'étalonnage, la résistance en courant continu (R_{acE}) et la résistance en courant alternatif (R_{dcE}) du dispositif de chauffage sont mesurées en fonction de la température de la pièce de machine chauffée à différentes valeurs de la tension alternative d'alimentation (U_{sE}), et pour chaque paire de valeurs constituée d'une valeur de température et d'une valeur de tension, la différence (△R_{E} = R_{acE} - R_{dcE}) des deux valeurs de résistance mesurées est formée et est mise en mémoire dans une mémoire associée au dispositif de chauffage.

3. Procédé selon la revendication 1 ou 2, **caractérisé en ce que** dans la phase de fonctionnement, la tension alternative d'alimentation (U_{sB}) ainsi qu'en alternance temporelle, la résistance en courant alternatif (R_{acB}) et la résistance en courant continu (R_{dcB}) du dispositif de chauffage sont mesurées, la différence des résistances (△R_{B} = R_{acB} - R_{dcB}) est calculée et est comparée à la valeur (△R_{E}) associée à la tension d'alimentation mesurée par (U_{sB}), et le signal de réglage pour un régulateur de température associé au dispositif de chauffage est dérivé de la différence.

4. Procédé selon la revendication 2 ou 3, **caractérisé en ce que** pour la mesure de la résistance (R_{dc}) en courant continu, la tension alternative d'alimentation (Uₛ) est périodiquement débranchée du dispositif de chauffage et une tension continue (U_{dc}) est amenée à ce dernier en remplacement.

5. Procédé selon la revendication 4, **caractérisé en ce que** la tension continue est appliquée sur le dispositif de chauffage par l'intermédiaire d'une pré-résistance élevée par rapport à la résistance du dispositif de chauffage.

6. Procédé selon l'une des revendications 1 à 5, **caractérisé en ce que** la résistance mesurée en courant continu (R_{dc}) est soustraite scalairement de la résistance mesurée en courant continu (R_{ac}).

7. Procédé selon l'une des revendications 1 à 6, **caractérisé en ce que** l'opération de mesure pendant la phase de fonctionnement est répétée au rythme du cycle d'échantillonnage d'un régulateur de température associé plusieurs dispositifs de chauffage.

8. Procédé sur l'une des revendications 1 à 7, **caractérisé en ce que** le dispositif de chauffage du réchauffeur à induction est une galette.

9. Procédé selon l'une des revendications 1 à 7, **caractérisé en ce que** le dispositif de chauffage est un réchauffeur à résistance, par exemple un barreau chauffant en tantale.
